# DEMANDE DE BREVET EUROPEEN

(11) **EP 1 795 299 A1**
(43) Date de publication de la demande: **13.06.2007**
(21) Numéro de dépôt: 06291867.7
(22) Date de dépôt: 04.12.2006
(51) Int. Cl.: B23Q 3/06, B25B 5/14

(54) **Dispositif de positionnement et de fixation d'un carter de moteur à combustion interne et procédé associé**

(30) Priorité: 09.12.2005 FR 0512525
(71) Demandeur: Société des Procédés et Machines Speciales, 91080 Courcouronnes (FR)
(72) Inventeur: Bonachera, Richard, 94300 Vincennes (FR)
(74) Mandataire: de Kernier, Gabriel

(57) **Abrégé**

Le dispositif de positionnement et de fixation d'au moins un carter 3 de moteur à combustion interne pour l'usinage dudit carter, est pourvu d'un plateau 2 de support comprenant une surface de réception du carter, d'au moins deux unités de maintien 5, 6 du carter montées sur le plateau de support en regard l'une par rapport à l'autre, chaque unité de maintien comprenant un corps 8, 9, un doigt de butée mobile 14 par rapport au corps et pourvu de surfaces de contact 14a, 15a, avec une portée de ligne de vilebrequin du moteur.

Le dispositif comprend, en outre, des plots de fixation 23, 24, munis de surfaces de contact avec une surface inférieure du carter, et mobiles en translation entre une position extrême rapprochée et une position extrême éloignée par rapport au plateau de support, les surfaces de contact des plots de fixation 23, 24 étant, dans la position extrême éloignée, en appui sur la surface inférieure du carter et sensiblement décalées vers le haut par rapport à la surface de réception du plateau de support, lesdits plots de fixation 23, 24 se déplaçant de manière à assurer au moins une fixation isostatique du carter.

## Description

La présente invention concerne un dispositif de positionnement et de fixation d'au moins un carter de moteur à combustion interne, notamment de véhicule automobile, pour l'usinage dudit carter ainsi qu'un procédé associé.

Dans l'industrie automobile, on cherche à l'heure actuelle à obtenir un état de surface particulièrement précis de la surface supérieure d'un carter de moteur à combustion interne destinée à être en contact avec une culasse, par l'intermédiaire d'un joint de culasse. Le joint de culasse assure l'étanchéité entre le carter et la culasse, notamment l'étanchéité des chambres de combustion et du circuit de refroidissement du moteur, permettant le bon fonctionnement du moteur.

Toutefois, cette étanchéité ne peut être obtenue sans un usinage particulièrement précis de la surface supérieure du carter, la qualité d'étanchéité étant fonction de l'état de surface de ladite surface.

Généralement pour réaliser l'usinage de la surface supérieure du carter, on positionne ledit carter sur une surface d'appui plane, on assujettit le carter sur ladite surface d'appui, puis on effectue l'usinage de la surface supérieure du carter, par exemple une rectification.

Un tel procédé de fabrication présente l'inconvénient de permettre, au niveau de la surface supérieure du carter, l'obtention d'un état de surface et de tolérances géométriques souhaités uniquement lorsque la surface inférieure du carter ainsi que la surface d'appui plane recevant ledit carter présentent des tolérances de forme, notamment une planéité, comprises dans des intervalles relativement restreints, ce qui augmente sensiblement le coût de fabrication du carter. En effet, un défaut de forme d'une desdites surfaces peut générer, lorsqu'on procède à l'usinage, un basculement du carter empêchant l'obtention d'une surface supérieure plane.

La présente invention a donc pour but de remédier à ces inconvénients en proposant un dispositif de positionnement et de fixation d'un carter de moteur thermique pour l'usinage dudit carter particulièrement précis, fiable et économique.

A cet effet, un premier aspect de l'invention concerne un dispositif de positionnement et de fixation d'au moins un carter de moteur à combustion interne pour l'usinage dudit carter, est pourvu d'un plateau de support comprenant une surface de réception du carter, d'au moins deux unités de maintien du carter montées sur le plateau de support en regard l'une par rapport à l'autre, chaque unité de maintien comprenant un corps, un doigt de butée mobile par rapport au corps et pourvu de surfaces de contact avec une portée de ligne de vilebrequin du carter.

Le dispositif comprend, en outre, des plots de fixation, munis de surfaces de contact avec une surface inférieure du carter, et mobiles en translation entre une position extrême rapprochée et une position extrême éloignée par rapport au plateau de support, les surfaces de contact des plots de fixation étant, dans la position extrême éloignée, en appui sur la surface inférieure du carter et sensiblement décalées vers le haut par rapport à la surface de réception du plateau de support, lesdits plots de fixation se déplaçant de manière à assurer au moins une fixation isostatique du carter.

Avantageusement, le dispositif comprend des premier et second ensembles de plots de fixation pourvu chacun d'au moins deux plots de fixation, les plots du premier ensemble étant aptes à se déplacer simultanément jusqu'à ce que lesdits plots viennent en contact avec la surface inférieure du carter, les plots du second ensemble étant aptes à se déplacer simultanément jusqu'à ce qu'un des plots vienne en contact avec la surface inférieure de carter, l'autre plot du second ensemble étant apte à se déplacer indépendamment jusqu'à venir en contact avec ladite surface inférieure.

Un dispositif pourvu de tels plots de fixation mobiles verticalement présente l'avantage de garantir un maintien efficace du carter lors de son usinage. En effet, le premier ensemble de plots de fixation permet d'obtenir au moins un contact avec la surface inférieure du carter, le second ensemble de plots pourvu de plots aptes à se déplacer indépendamment l'un par rapport à l'autre permet d'obtenir deux contacts avec ladite surface inférieure. On obtient ainsi une fixation isostatique ou hyperstatique du carter limitant sensiblement un éventuel basculement pendant son usinage.

Par ailleurs, l'utilisation de doigts de butée mobile aptes à être en contact avec des portées de la ligne de vilebrequin du carter permet l'obtention d'une chaîne de côtes réduite pour réaliser un contrôle plus précis des tolérances géométriques de la surface supérieure du carter. En effet, la chaîne de côtes peut être calculée ici entre la ligne de vilebrequin et la surface supérieure du carter.

De préférence, le dispositif comprend des bras de déplacement des premier et second ensemble de plots de fixation pourvus de portions tronconiques coopérant avec des extrémités inférieures des plots de fixation pour réaliser le déplacement desdits plots.

Dans un mode de réalisation préféré, les bras de déplacement du second ensemble de plots de fixation sont reliés entre eux par un palonnier.

Le dispositif peut comprendre au moins deux plots de réception du carter fixés sur le plateau de support.

Préférentiellement, le dispositif comprend au moins un actionneur mécanique des bras de déplacement.

Avantageusement, le dispositif comprend au moins un actionneur hydraulique, ou mécanique, ou encore hydraulique, des bras de déplacement.

Le plateau peut être mobile en rotation autour d'un axe sensiblement vertical.

De préférence, le dispositif comprend quatre unités de maintien et quatre ensemble de plots pour le positionnement et la fixation de deux carters.

Un second aspect de l'invention concerne un procédé de positionnement et de fixation d'au moins un carter de moteur à combustion interne pour l'usinage dudit carter, caractérisé en ce qu'il comprend les étapes au cours desquelles :
- on dépose le carter sur une surface de réception d'un plateau de support, puis
- on positionne deux doigts de butée contre des portées d'une ligne de vilebrequin du carter du moteur, puis
- on déplace en translation des plots de fixation entre une position extrême rapprochée jusqu'à une position extrême éloignée par rapport au plateau de support dans laquelle une surface de contact desdits plots avec le carter est sensiblement décalée vers le haut par rapport à la surface de réception du plateau de support et en contact avec la surface inférieure du carter, lesdits plots se déplaçant de manière à assurer au moins une fixation isostatique du carter.

La présente invention et ses avantages seront mieux compris à l'étude de là description détaillée d'un mode de réalisation pris à titre d'exemple nullement limitatif et illustré par les dessins annexés, sur lesquels :
- la figure 1 est une vue schématique de côté du dispositif de positionnement et de fixation d'un carter selon l'invention, et
- la figure 2 est un schéma cinématique du dispositif de la figure 1.

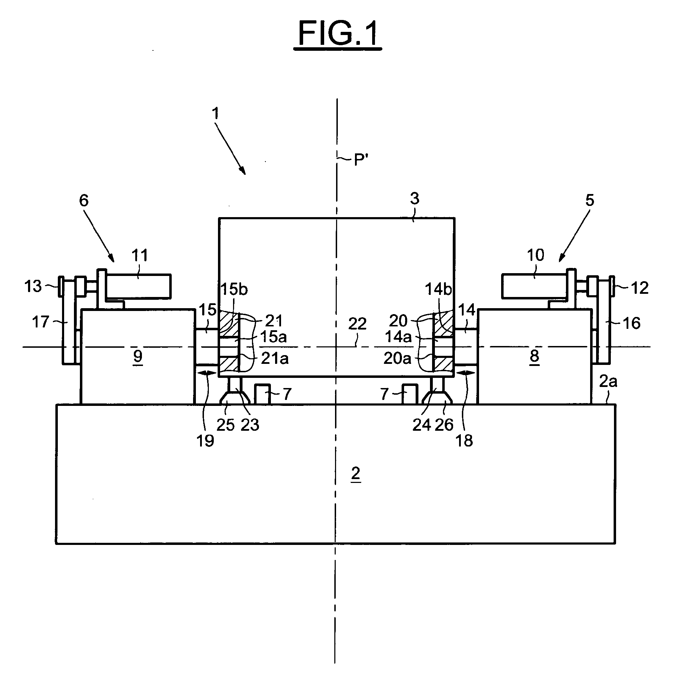

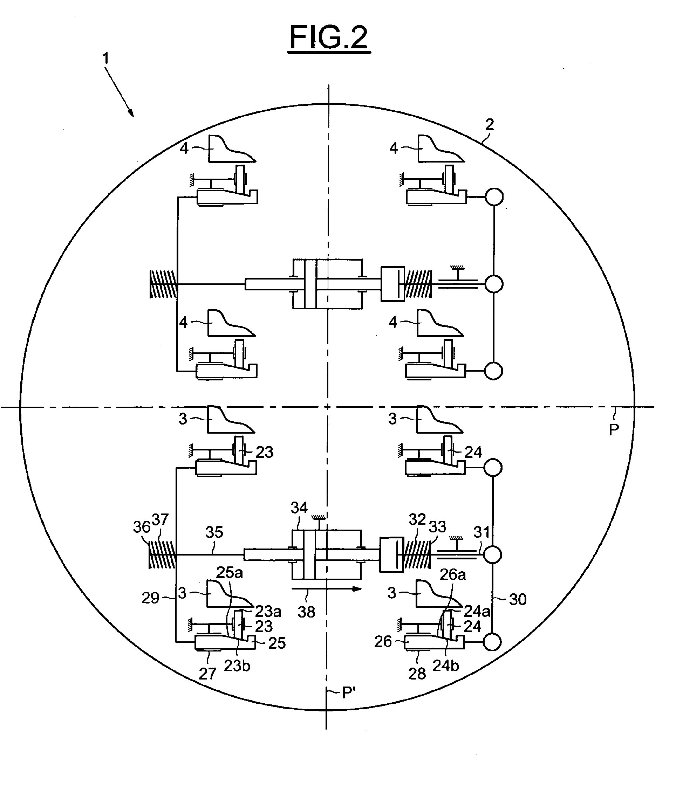

Sur les figures 1 et 2, on a représenté la structure générale d'un dispositif conforme à l'invention, désigné par la référence numérique générale 1, et apte à permettre le positionnement et la fixation d'au moins un carter en vue de son usinage.

Dans l'application envisagée, ce dispositif est destiné à la mise en position et à la fixation de deux carters. Toutefois, on conçoit aisément que le dispositif peut s'appliquer également à la mise en position et à la fixation d'un unique carter, ou encore d'un nombre de carters supérieur à deux.

Le dispositif 1 comprend un plateau 2 de support, réalisé ici sous la forme d'un disque, des unités de maintien de carters 3, 4 de moteur montées sur une surface 2a supérieure dudit plateau 2, et des plots de réception fixés sur ladite surface 2a. Seulement deux unités de maintien référencées 5, 6 et deux plots de réception 7 sont visibles sur les figures.

Les unités de maintien sont identiques entre elles et montées par paire sur le plateau 2 en étant fixées de façon symétrique par rapport à un premier plan médian P vertical dudit plateau 2, une paire étant spécifiquement dédiée à un carter. Les unités de maintien d'une paire, par exemple les unités de maintien 5 et 6, sont disposées de façon symétrique par rapport à un second plan médian P' du plateau 2, perpendiculaire audit premier plan P.

Chaque unité de maintien 5, 6 est pourvue d'un corps 8, 9 rapporté sur la surface 2a supérieure du plateau 2, d'un actionneur 10, 11, fixé à une extrémité supérieure dudit corps et comprenant une tige 12, 13 dirigée vers l'extérieur, et d'un doigt de butée 14, 15 monté de façon coulissante à l'intérieur du corps 8, 9 et venant en saillie du côté du carter 3. Le doigt de butée 14, 15 est relié à ladite tige par l'intermédiaire d'un élément de renvoi 16, 17.

Le doigt de butée 14, 15, par exemple réalisé sous la forme d'une tige cylindrique, comprend une portion d'extrémité 14a, 15a de diamètre réduit par rapport au doigt ménageant une surface radiale 14b, 15b avec le carter 3. Le doigt de butée 14, 15 est commandé par l'actionneur 10, 11. L'actionneur 10, 11 est avantageusement un vérin à double effet. Le doigt de butée 14, 15 est mobile entre une position extrême rapprochée et une position extrême éloignée par rapport au corps 8, 9, illustré schématiquement par les flèches 18, 19.

Dans la position extrême éloignée, la surface radiale 14b, 15b du doigt de butée 14, 15 laisse subsister un léger jeu axial entre elle et la face extérieure d'une paroi latérale 20, 21 du carter 3, et la portion d'extrémité 14a, 15a vient en contact avec une portée 20a, 21a de ladite paroi 20, 21, d'axe 22, destinée à supporter une ligne de vilebrequin. La portion d'extrémité 14a, 15a est configurée de manière à être en contact avec la portée 20a, 21 a au niveau de deux portions localisées de ladite portée et situées en partie basse.

Dans cette position, le carter 3 peut être maintenu latéralement de part et d'autre par des guides latéraux (non représentés) venant en appui contre les faces latérales du carter 3.

Les plots 7 de réception des carters 3, 4 sont fixés au niveau de la surface 2a du plateau 2 par groupe de quatre, un groupe de plots 7 étant dédié à une paire d'unité de maintien. Les plots 7 d'un groupe sont symétriques aux plots 7 de l'autre groupe en considérant le plan médian P du plateau 2, les plots 7 de réception d'un même groupe étant disposés symétriquement par rapport au plan médian P' dudit plateau 2 de manière à obtenir deux plots 7 au voisinage de chaque unité de maintien. Les surfaces supérieures des plots de réception 7 forment des surfaces de réception des carters 3, 4.

Le dispositif 1 comprend également des premier et second ensemble de plots 23, 24 de fixation pour chacune des paires des unités de maintien, et des bras de déplacement 25, 26 desdits ensemble de plots 23, 24.

Le premier ensemble de plots 23 est symétrique par rapport au second ensemble de plots 24 en considérant le plan médian P' du plateau 2. Les plots 23, 24 dédiées à une paire d'unité de maintien sont respectivement symétriques par rapport aux plots 23, 24 de l'autre paire d'unité de maintien par rapport au plan P. Les plots 23, 24 comprennent respectivement à leurs extrémités supérieure et inférieure des surfaces de contact 23a, 24a avec une surface inférieure des carters 3, 4 et des surfaces de contact 23b, 24b avec des portions tronconiques 25a, 26a des bras 25, 26 de déplacement.

Les bras 25, 26, disposés parallèlement à la surface 2a du plateau 2, sont montés à l'intérieur de coulisses 27, 28 fixées sur le plateau 2. Les coulisses 27, 28 forment également un moyen de guidage en translation pour les plots 23, 24 suivant un axe vertical sensiblement perpendiculaire à la direction de déplacement des bras 25, 26.

Un déplacement desdits bras 25, 26 génère ainsi une translation des plots de fixation 23, 24 suivant une direction sensiblement perpendiculaire audits bras 25, 26 par coopération des surfaces 23b et 24b avec les surfaces 25a et 26a. Les plots 23, 24 peuvent ainsi se déplacer entre une position extrême rapprochée et une position extrême éloignée par rapport au plateau de support 2 dans laquelle les surfaces de contact 23a, 24a sont en appui avec la surface inférieure des carters 3, 4 et sensiblement décalées vers le haut par rapport aux surfaces supérieures des plots 7 de réception.

Dans la position extrême éloignée, les surfaces de contact 23a, 24a sont décalées par rapport aux surfaces supérieures des plots 7 de l'ordre de quelque dixièmes de millimètres. Les plots 23, 24 sont agencés de manière à être positionnés, dans la position extrême éloignée, au voisinage des coins des carters 3, 4.

Entre les bras de déplacement 25 du premier ensemble de plots 23 de fixation, associés à une unité maintien, par exemple l'unité de maintien référencée 6, est fixé transversalement un élément de liaison 29 de manière à obtenir un déplacement synchronisé des bras de déplacement 25 et des plots 23 de fixation.

Les bras de déplacement 26 du second ensemble de plots 24 de fixation, associés à une paire d'unité maintien, par exemple l'unité de maintien référencée 5, sont reliés par une barre formant palonnier 30 monté transversalement entre lesdits bras. Le palonnier 30 peut comprendre des portions d'extrémités sphériques venant se loger à l'intérieur de gorges ménagées au niveau des bras de déplacement 26 de manière à obtenir, à chaque extrémité dudit palonnier 30, une liaison pivot, représentée schématiquement sur la figure 2.

Le palonnier 30 est également articulé à rotation en son centre sur une première barre 31 d'actionnement, par exemple en prévoyant un téton en saillie verticalement vers le haut sur ladite barre et un évidemment circulaire sur le palonnier 30 apte à permettre le passage dudit téton.

Autour de la barre 31 d'actionnement, montée de façon coulissante par rapport au plateau 2, est disposé un actionneur mécanique 32, tel qu'un ressort. Une extrémité du ressort 32 est en appui avec une butée 33 fixée sur ladite barre 31, l'autre extrémité étant en contact avec l'extrémité mobile d'une première tige d'un actionneur hydraulique 34, par exemple un vérin à double effet fixé sur le plateau 2. Une seconde tige opposée à la première par rapport à un piston du vérin est fixée à une seconde barre d'actionnement 35.

Sur la barre d'actionnement 35 est fixée, à une extrémité libre, une butée 36. Un actionneur mécanique 37, tel qu'un ressort, est monté autour de ladite barre d'actionnement 35, une extrémité du ressort étant en appui sur la butée 36, l'autre extrémité étant en contact avec l'élément de liaison 29. Les première et seconde barres 31, 35, ainsi que les actionneurs hydraulique et mécanique 34, 37 forment des moyens d'actionnement des plots de fixation 23, 24.

Le fonctionnement du dispositif est le suivant : après avoir déposé le carter 3 et/ou le carter 4 sur les plots de réception 7, on commande le déplacement des doigts de butée 14, 15 et on maintient latéralement le carter de part et d'autre.

Ensuite, on exerce de manière contrôlée, par l'intermédiaire du ressort 37, une force sur l'élément de liaison 29 engendrant un coulissement de la barre d'actionnement 35 par rapport au plateau de support 2, illustré schématiquement par la flèche 38. Le coulissement provoque le déplacement des plots de fixation 23 verticalement en direction de la surface inférieure du carter 3 et la compression du ressort 32, le palonnier 30 étant bloqué en translation par un organe d'arrêt (non représenté).

Lors du contact entre les deux plots de fixation 23 et la surface inférieure du carter 3, on bloque le déplacement de la barre d'actionnement 35, puis on retire l'organe d'arrêt bloquant la translation du palonnier 30. Le ressort 32 exerce alors une force sur la butée 33 engendrant le coulissement de la barre d'actionnement 35 par rapport au plateau de support 2 et le déplacement vertical simultané des plots de fixation 24.

Lors du contact entre un des plots 24 et la surface inférieure du carter 3, la barre d'actionnement 31 continue à coulisser par rapport au plateau de support 2 provoquant la rotation du palonnier 30 autour d'un axe sensiblement vertical et permettant de réaliser le déplacement vertical de l'autre plot de fixation 24 jusqu'à une mise en contact de la surface 24a et de la surface inférieure du carter 3.

Le carter 3 est ainsi fixé au moins de façon isostatique par les plots de fixation 23, 24. D'une manière analogue, on réalise le bridage du carter 4. D'une manière analogue, on réalise le bridage du carter 4, puis on entraîne en rotation, autour d'un axe vertical, le plateau de support de manière à réaliser l'usinage des surfaces supérieures des carters 3, 4.

Le dispositif permet ainsi de réaliser un positionnement et une fixation du carter, par rapport au plateau de support, de manière isostatique ou hyperstatique limitant ainsi en éventuel basculement du carter pendant son usinage, et ce, de façon particulièrement simple, efficace, rapide et économique.

## Revendications

1. Dispositif de positionnement et de fixation d'au moins un carter (3) de moteur à combustion interne pour l'usinage dudit carter, **caractérisé en ce qu'**il est pourvu d'un plateau (2) de support comprenant une surface de réception du carter, d'au moins deux unités de maintien (5, 6) du carter montées sur le plateau de support en regard l'une par rapport à l'autre, chaque unité de maintien comprenant un corps (8, 9), un doigt de butée mobile (14) par rapport au corps et pourvu de surfaces de contact (14a, 15a) avec une portée de ligne de vilebrequin du moteur, le dispositif comprenant, en outre, des plots de fixation (23, 24), munis de surfaces de contact avec une surface inférieure du carter, et mobiles en translation entre une position extrême rapprochée et une position extrême éloignée par rapport au plateau de support, les surfaces de contact des plots de fixation (23, 24) étant, dans la position extrême éloignée, en appui sur la surface inférieure du carter et sensiblement décalées vers le haut par rapport à la surface de réception du plateau de support, lesdits plots de fixation (23, 24) se déplaçant de manière à assurer au moins une fixation isostatique du carter.

2. Dispositif selon la revendication 1, **caractérisé en ce qu'**il comprend des premier et second ensembles de plots de fixation (23, 24) pourvu chacun d'au moins deux plots de fixation, les plots (23) du premier ensemble étant aptes à se déplacer simultanément jusqu'à venir en contact avec la surface inférieure du carter, les plots du second ensemble (24) étant aptes à se déplacer simultanément jusqu'à ce qu'un desdits plots viennent en contact avec la surface inférieure de carter, l'autre plot du second ensemble étant apte à se déplacer indépendamment jusqu'à venir en contact avec ladite surface inférieure.

3. Dispositif selon la revendication 2, **caractérisé en ce qu'**il comprend des bras de déplacement (25, 26) des premier et second ensemble de plots de fixation (23, 24) pourvus de portions tronconiques (25a, 26a) coopérant avec des extrémités inférieures (23b, 24b) des plots de fixation pour réaliser le déplacement desdits plots.

4. Dispositif selon la revendication 3, **caractérisé en ce que** les bras de déplacement (26) du second ensemble de plots de fixation sont reliés entre eux par un palonnier (30).

5. Dispositif selon l'une quelconque des revendications précédentes, **caractérisé en ce qu'**il comprend au moins deux plots de réception (7) du carter fixés sur le plateau de support.

6. Dispositif selon l'une quelconque des revendications 3 à 5, **caractérisé en ce qu'**il comprend au moins un actionneur mécanique (32, 37) des bras de déplacement (25, 26).

7. Dispositif selon l'une quelconque des revendications 3 à 6, **caractérisé en ce qu'**il comprend au moins un actionneur hydraulique (34), pneumatique ou mécanique des bras de déplacement (25, 26).

8. Dispositif selon l'une quelconque des revendications précédentes, **caractérisé en ce que** le plateau (2) de support est mobile en rotation autour d'un axe sensiblement vertical.

9. Dispositif selon l'une quelconque des revendications précédentes, **caractérisé en ce qu'**il comprend quatre unités de maintien et quatre ensemble de plots de fixation pour le positionnement et la fixation de deux carters (3, 4).

10. Procédé de positionnement et de fixation d'au moins un carter de moteur à combustion interne pour l'usinage dudit carter, **caractérisé en ce qu'**il comprend les étapes au cours desquelles :
- on dépose le carter sur une surface de réception d'un plateau de support, puis
- on positionne deux doigts de butée contre des portées d'une ligne de vilebrequin du carter du moteur, puis
- on déplace en translation des plots de fixation entre une position extrême rapprochée jusqu'à une position extrême éloignée par rapport au plateau de support dans laquelle une surface de contact desdits plots avec le carter est sensiblement décalée vers le haut par rapport à la surface de réception du plateau de support et en contact avec la surface inférieure du carter, lesdits plots se déplaçant de manière à assurer au moins une fixation isostatique du carter.
